# EUROPÄISCHE PATENTSCHRIFT

(11) **EP 2 626 403 B1**
(45) Veröffentlichungstag und Bekanntmachung des Hinweises auf die Patenterteilung: **11.10.2017**
(21) Anmeldenummer: 13152686.5
(22) Anmeldetag: 25.01.2013
(51) Int. Cl.: C10B 1/04, C10B 25/10, C10B 55/00, F16K 3/02

(54) **VERKOKUNGSTROMMEL, ROHRBRÜCKENSCHIEBER FÜR EINE VERKOKUNGSTROMMEL UND VERFAHREN ZUM ZUFÜHREN VON RESTSTOFFEN IN EINE VERKOKUNGSTROMMEL**
COKING DRUM, PIPE BRIDGE SLIDER FOR A COKING DRUM AND METHOD FOR FEEDING RESIDUAL MATERIALS INTO A COKING DRUM
TAMBOUR DE COKÉFACTION, COULISSE À PONT TUBULAIRE POUR UN TAMBOUR DE COKÉFACTION ET PROCÉDÉ D'ALIMENTATION DE RÉSIDUS DANS UN TAMBOUR DE COKÉFACTION

(30) Priorität: 08.02.2012 DE 102012101015
(43) Veröffentlichungstag der Anmeldung: 14.08.2013
(73) Patentinhaber: Z & J Technologies GmbH, 52355 Düren (DE)
(72) Erfinder: Brzoska, Ekkehard, 45472 Mülheim (DE)
(74) Vertreter: Popp, Eugen

(56) Entgegenhaltungen:
- EP-A1- 1 516 908
- WO-A1-03/104353
- WO-A2-2010/093763
- CN-Y- 200 986 033
- CN-Y- 201 077 829

## Beschreibung

Die Erfindung betrifft eine Verkokungstrommel gemäß dem Anspruch 1, einen Rohrbrückenschieber für eine Verkokungstrommel gemäß Anspruch 11 und Verfahren zum Zuführen von Reststoffen in eine Verkokungstrommel gemäß Anspruch 12. Bei der Rohölverarbeitung wird zunehmend Wert darauf gelegt, schwere Produkte, die bei der Destillation von Rohöl übrig bleiben, zu leichteren Produkten weiterzuverarbeiten. Somit soll die Erzeugung schweren Heizöls vermindert und die Produktion von Benzin, Dieselkraftstoff und leichtem Heizöl gesteigert werden, ohne zusätzliches Rohöl verarbeiten zu müssen. Die Anlagen, die dazu nötig sind und nach verschiedenen Verfahren arbeiten, nennt man Konversionsanlagen. Diese wandeln schwere, lange Kohlenwasserstoffmoleküle in leichte, kürzere Kohlenwasserstoffmoleküle um, indem die langen Moleküle gespalten werden. Man unterscheidet drei solche Crackverfahren: das thermische, das katalytische und das Hydrocracken. Die optimale Verfahrenskombination richtet sich nach mehreren Gesichtspunkten, zu denen u.a. die Beschaffenheit des vorhandenen Rohöls und die erwünschten Produkte gehören. Die verschiedenen Crackverfahren gehen von unterschiedlichen Einsatzprodukten aus, wobei Gasöl aus der Vakuumdestillation als Einsatzprodukt für katalytische Crackanlagen und Hydrocracker fungiert und der Rückstand aus der Vakuumdestillation in Visbreakern oder Cokern als Einsatzprodukt Verwendung findet.

Das am längsten bekannte und wohl einfachste Crackverfahren ist das thermische Cracken. Dabei werden bei hohen Temperaturen Kohlenwasserstoffketten gespalten. Zur Gruppe der thermischen Crackverfahren gehören das sogenannte Visbreaken und das Verkoken, bei dem sich Kohlenstoff in fester Form, sogenannter Koks bzw. Petroleumkoks absetzt.

Man unterscheidet drei verschiedene Verfahren zum Verkoken, nämlich das sogenannte Fluid Coken, das sogenannte Delayed Coken und das sogenannte Flexicoken. Das am häufigsten angewandte Verfahren ist das des Delayed Coken. Bei diesem Verfahren wird mit einem Druck von etwa 30 bar das Einsatzprodukt, das z.B. der Rückstand aus der Vakuumdestillation sein kann, in einen Ofen geleitet und auf etwa 500 °C erhitzt. Aufgrund dieser Bedingungen durchströmt es den Ofen mit sehr hoher Geschwindigkeit und verkokt dann beim Eintritt in eine vom Ofen getrennte und mit diesem über eine Rohrleitung verbundene Verkokungskammer bzw. Verkokungstrommel, in der ein Kammerdruck von ungefähr 4 bar herrscht.

Im Allgemeinen sind jedem Ofen mindestens zwei Verkokungstrommeln zugeordnet, wobei sich jeweils eine dieser Kammern in Betrieb befindet, während aus der anderen der Koks entfernt wird. Dieser kann z.B. mittels Wasser unter hohem Druck aus der Verkokungstrommel herausgeschnitten werden. Die beim Verkoken entstehenden leichten Kohlenwasserstoffe werden von der Verkokungskammer in einen Fraktionierturm geleitet und dort weiterverarbeitet. Der entstehende Petrolkoks wird Grünkoks genannt und kann nach dem Zerkleinern entweder verkauft werden oder weiter veredelt werden. Die Weiterveredelung geschieht in einem Kalzinierungsprozess, in dem bei Temperaturen von 1200 °C und mehr noch vorhandene Ölbestandteile abgebrannt und verkokt werden. Das dabei entstehende Kalzinat kann dann beispielsweise für Elektroden verwandt werden, die in der Aluminiumindustrie zum Einsatz kommen. Die jeweils gefüllte Trommel wird gekühlt, und der Koks wird aus ihr entfernt. Dazu wird zuerst Wasser in die Trommel geleitet, um den entstandenen, heißen Koks zu kühlen. Dann wird die Trommel zur Atmosphäre hin geöffnet, indem, je nach Bauart der Verkokungskammer bzw. -trommel, entweder nur die Bodenseite oder aber auch die Kopfseite der Trommel bzw. Kammer geöffnet wird, so dass der Koks aus der Trommel herausgeschnitten und seiner weiteren Verwendung zugeführt werden kann.

Der Vorgang des Öffnens der Verkokungstrommel kann aus mehreren Gründen Gefahrenquellen aufweisen. Das Wasser, das in die Trommel zum Kühlen des Koks vor dem Öffnen der Trommel eingeleitet wird, wird sehr heiß, was bei nicht vorsichtiger Handhabung der Apparaturen zu Verletzungen aufgrund von austretendem heißen Wasser bzw. Wasserdampf, der unter Druck steht, führen kann. Ferner können lose Koksstücke aus der Trommel fallen bzw. die Öffnungsmechanismen so belasten, dass diese nach dem Entriegeln schlagartig aufklappen, was ebenso zu Verletzungen des Bedienungspersonals führen kann. Weiterhin kann das Bedienungspersonal auch Stäuben, insbesondere Kokspartikeln und auch reizenden oder giftigen Gasen ausgesetzt sein, wenn die Trommeln geöffnet werden.

Um die Gefahrenquellen für das Bedienungspersonal zu verringern, wurde dazu übergegangen, die Verkokungstrommeln nicht mehr manuell zu öffnen, sondern automatisch durch spezielle, beispielsweise hydraulische Absperrventile. Eine solche Verkokungstrommel mit einem Absperrventil, welches als Rohrbrückenschieber ausgebildet ist, ist aus der EP 1 516 908 B1 bekannt. Bei der in dieser Druckschrift dargestellten Vorrichtung handelt es sich um eine Verkokungstrommel, bei der an einem Auslass und/oder an einem Einlass ein Rohrbrückenschieber als Absperrglied angeordnet ist, der zwei Absperrplatten aufweist. Weiterhin erfolgt dort die Zuführung von Reststoffen, insbesondere aus einem der Verkokung vorgeschalteten Vakuum-Destillationsprozess, in die Verkokungstrommel durch eine Zufuhröffnung, die mit einigem Abstand oberhalb des Absperrventils in einer Seitenwand der Verkokungstrommel vorgesehenen ist WO-A-03/104353, CN-Y-200986033 und WO-A-2010/093763 offenbaren Verkokungstrommeln mit einem an der Ausgangsöffnung angeordneten Absperrventil. Nachteilig an dieser bekannten Verkokungstrommel ist, dass eine homogene Temperaturverteilung und eine gleichmäßige Verteilung der Reststoffe in der Verkokungstrommel nicht gewährleistet ist.

Aufgabe der vorliegenden Erfindung ist es daher, eine Verkokungstrommel und ein Absperrventil sowie ein Verfahren zu schaffen, die eine verbesserte Zuführung von Reststoffen in die Verkokungstrommel gewährleisten, sodass insbesondere eine homogene Temperaturverteilung während des Verkokungsprozesses in der Verkokungstrommel gewährleistet ist.

Diese Aufgabe wird durch eine Verkokungstrommel mit den Merkmalen des Anspruchs 1 gelöst. Die Verkokungstrommel gemäß der Erfindung dient insbesondere für die Herstellung von Petroleumkoks. Sie weist einen annähernd zylindrischen Grundkörper sowie mindestens eine Eingangsöffnung und eine Ausgangsöffnung auf, wobei an der Ausgangsöffnung und/oder an der Eingangsöffnung ein Absperrventil angeordnet ist, wobei das Absperrventil als Rohrbrückenschieber mit wenigstens einer Absperrplatte ausgebildet ist. Die Verkokungstrommel zeichnet sich dadurch aus, dass auf Höhe des Rohrbrückenschiebers wenigstens eine Zugangsöffnung zum Zuführen von Reststoffen, insbesondere aus einem der Verkokung vorgeschalteten Vakuum-Destillationsprozess, in die Verkokungstrommel vorgesehen ist.

Ein wesentlicher Punkt der Erfindung liegt somit darin, dass die Reststoffe auf Höhe des Rohrbrückenschiebers durch die wenigstens eine Zugangsöffnung in die Verkokungstrommel eingebracht werden, sodass eine gleichmäßige Temperaturverteilung in der Verkokungstrommel während des Verkokungsprozesses gewährleistet ist. Vorzugsweise ist die wenigstens eine Zugangsöffnung in dem Absperrventil angeordnet. Dadurch kann eine besonders zentrale Zuführung der Reststoffe in die Verkokungstrommel erfolgen. Das Absperrventil ist als Rohrbrückenschieber ausgebildet. Der Rohrbrückenschieber kann insbesondere als Einplattenschieber mit einer Absperrplatte oder als Doppelplattenschieber mit zwei parallelen Absperrplatten ausgebildet sein. Wenn das Absperrventil als Einplattenschieber ausgebildet ist, ist die Zugangsöffnung vorzugsweise in der einzigen Absperrplatte ausgebildet, sodass durch die Zugangsöffnung Reststoffe in die Verkokungstrommel eingebracht werden können. Falls jedoch das Absperrventil als Doppelplattenschieber ausgebildet ist, ist die wenigstens eine Zugangsöffnung für Reststoffe in der der Ausgangsöffnung der Verkokungstrommel zugewandten Absperrplatte ausgebildet, um eine Zufuhr von Reststoffen in die Verkokungstrommel zu gewährleisten.

Vorzugsweise ist die wenigstens eine Zugangsöffnung mit mindestens einem in der Absperrplatte angeordneten Zufuhrkanal verbunden. Geeigneter Weise verläuft der wenigstens eine Zufuhrkanal im Wesentlichen parallel zu der Oberfläche der Absperrplatte. Der Zufuhrkanal kann rohrförmig oder dergleichen ausgebildet sein. Um eine Zufuhr von Reststoffen zu ermöglichen, steht der wenigstens eine Zufuhrkanal vorzugsweise mit einer Vakuumdestillationskammer in Verbindung, die der Verkokung in der Verkokungstrommel vorgeschaltet ist. Die oben genannte Aufgabe wird außerdem durch ein Absperrventil mit den Merkmalen des Anspruchs 11 gelöst. Bei dem Absperrventil handelt es sich um einen Rohrbrückenschieber und kommt üblicherweise in Verbindung mit einer Verkokungstrommel für die Herstellung von Petroleumkoks zum Einsatz. Das Absperrventil weist erfindungsgemäß eine integral darin ausgebildete Zuführungsvorrichtung zum Zuführen von Reststoffen in eine mit dem Absperrventil verbindbare Verkokungstrommel auf. Die Zuführungsvorrichtung umfasst wenigstens eine Zufuhröffnung und mindestens einen mit der Zufuhröffnung in Verbindung stehenden Zufuhrkanal. Hinsichtlich der Vorteile des Absperrventils gemäß der Erfindung wird auf die obigen Ausführungen zu der Verkokungstrommel verwiesen.

Die oben genannte Aufgabe wird auch durch ein Verfahren mit den Merkmalen des Anspruchs 12 gelöst. Dabei handelt es sich um ein Verfahren zum Zuführen von Reststoffen, insbesondere aus einem der Verkokung vorgeschalteten Vakuum-Destillationsprozess, in eine mit einem Absperrventil verbundene Verkokungstrommel, wobei das als Rohrbrückenschieber mit wenigstens einer Absperrplatte ausgebildet ist. Das erfindungsgemäße Verfahren zeichnet sich durch Zuführen der Reststoffe auf Höhe des Rohrbrückenschiebers in die Verkokungstrommel aus. Hinsichtlich der Vorteile des Verfahrens gemäß der Erfindung wird auf die obigen Ausführungen verwiesen.

Die Erfindung wird im Folgenden anhand der Zeichnung näher erläutert. Es zeigen:
- Fig. 1: eine schematische Schnittdarstellung eines Absperrventils gemäß der Erfindung in Form eines Einplattenschiebers;
- Fig. 2: eine schematische Schnittdarstellung eines Absperrventils gemäß der Erfindung in Form eines Doppelplattenschiebers;
- Fig. 3: eine schematische Darstellung eines Absperrventils mit einer Zugangsöffnung und einem Zufuhrkanal gemäß einer ersten Ausführungsform der Erfindung;
- Fig. 4: eine schematische Darstellung eines Absperrventils mit einer Zugangsöffnung und einem Zufuhrkanal gemäß einer zweiten Ausführungsform der Erfindung;
- Fig. 5: eine schematische Darstellung eines Absperrventils mit zwei Zugangsöffnungen und zwei Zufuhrkanälen gemäß einer dritten Ausführungsform der Erfindung, und
- Fig. 6: eine schematische Darstellung eines Absperrventils mit zwei Zugangsöffnungen und zwei Zufuhrkanälen gemäß einer vierten Ausführungsform der Erfindung.

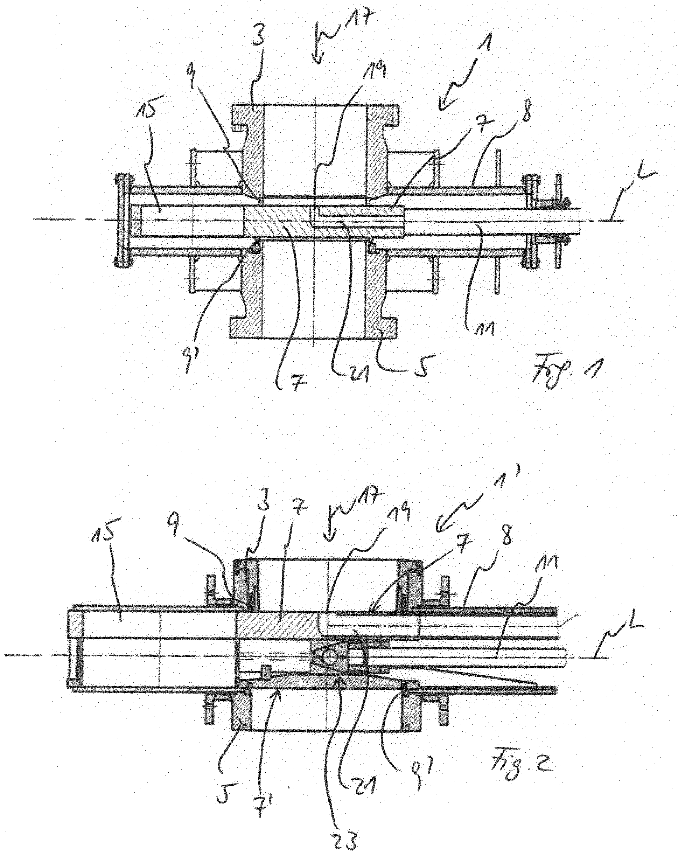

Fig. 1 zeigt eine schematische Schnittdarstellung eines Absperrventils 1. Das Absperrventil 1 ist dazu ausgebildet mit einer in der Figur nicht gezeigten Verkokungstrommel verbunden zu werden. Hierzu weist das Absperrventil 1 einen zylindrischen Rohrstutzen 3 auf. Gegenüber dem Rohrstutzen 3 ist ein weiterer zylindrischer Rohrstutzen 5 angeordnet. Im bestimmungsgemäßen Gebrauch des Absperrventils 1 ist der Rohrstutzen 3 üblicherweise mit einer Ausgangsöffnung einer Verkokungstrommel bzw. Verkokungskammer verbunden. Alternativ oder auch zusätzlich kann ein Absperrventil 1 gemäß Fig. 1 mit einer Eingangsöffnung einer Verkokungstrommel verbunden, insbesondere verflanscht sein.

In der Fig. 1 ist das Absperrventil 1 als Rohrbrückenschieber ausgebildet, der wiederum als Einplattenschieber ausgebildet ist. Das Absperrventil 1 umfasst somit eine Absperrplatte 7, die in einem Gehäuse 8 des Absperrventils 1 zwischen den Rohrstutzen 3 und 5 entlang einer Längsrichtung L des Absperrventils 1 beweglich gelagert ist. Gegenüber den Rohrstutzen 3 und 5 ist die Absperrplatte 7 mittels vorzugsweise ringförmig ausgebildeten Dichtelementen 9, 9' abgedichtet, die hier lediglich andeutungsweise erkennbar sind. Weiterhin wird eine Verlagerung der Absperrplatte 7 in der Längsrichtung L über eine Betätigungsstange 11 bewirkt, die mit einer geeigneten, in der Figur nicht gezeigten Antriebseinrichtung, zusammenwirkt.

Neben der Absperrplatte 7 ist eine Rohrbrücke 15 angeordnet, die vorzugsweise mit der Absperrplatte 7 über Materialstege oder dergleichen, insbesondere einstückig, verbunden ist. Die Rohrbrücke 15 ist hohlzylindrisch ausgebildet und verbindet die Rohrstutzen 3 und 5 in einer geöffneten Stellung des Absperrventils 1 ohne Verjüngung des Querschnitts miteinander. In der in Fig. 1 nicht gezeigten geöffneten Stellung des Absperrventils 1 kann nach Beendigung des Verkokungsprozesses der Koks durch die Ausgangsöffnung der Verkokungstrommel und weiter durch den Rohrstutzen 3, die Rohrbrücke 15 und den Rohrstutzen 5, der Koks aus der Verkokungstrommel in Richtung des Pfeils 17 entfernt werden.

In der Fig. 1 ist die geschlossene Stellung des Absperrventils 1 dargestellt. In dieser Stellung versperrt die Absperrplatte 17 die Durchgangsverbindung zwischen den beiden Rohrstutzen 3 und 5, sodass kein Koks bzw. zu verkokender Reststoff aus der Verkokungstrommel entweichen kann.

Bei geschlossener Stellung des Absperrventils 1 werden Reststoffe, insbesondere aus einem dem Verkokungsprozess vorgeschalteten Vakuumdestillationsverfahren in die Verkokungstrommel geleitet. Hierzu weist das Absperrventil 1 eine Zugangsöffnung 19 auf, die in der Absperrplatte 7 ausgebildet ist und damit in etwa auf Höhe der des Absperrventils 1 angeordnet ist. Die Zugangsöffnung 19 ist in der im montierten Zustand der Verkokungstrommel zugewandten Seite der Absperrplatte 7 eingebracht. Die Zugangsöffnung 19 ist vorzugsweise kreisförmig ausgebildet und steht mit einem in der Absperrplatte 7 integral ausgebildeten Zufuhrkanal 21 in Fluidverbindung, um eine Zuführung von Reststoffen in die Verkokungstrommel zu ermöglichen. Die Zugangsöffnung 19 und der Zufuhrkanal 21 sind vorzugsweise einstückig ausgebildet. Mit anderen Worten sind beide in der Absperrplatte 7 angeordnet und gehen unmittelbar ineinander über.

Die Zugangsöffnung 19 ist vorzugsweise so in der Absperrplatte 7 angeordnet, dass im geschlossenen Zustand des Absperrventils 1, wie in Fig. 1 gezeigt, die Zugangsöffnung 19 im Wesentlichen zentrisch in Bezug auf den Rohrstutzen 3 angeordnet ist. Dadurch wird eine zentrale Zufuhr der Reststoffe und somit eine besonders homogene Verteilung der Reststoffe in der Verkokungstrommel gewährleistet.

Der Zufuhrkanal 21 ist in der Absperrplatte 7 im Wesentlichen parallel zu deren Oberfläche angeordnet, die wiederum parallel zu der Längsachse L des Absperrventils 1 verläuft. In der Schnittdarstellung ist der Zufuhrkanal 21 L-förmig ausgebildet und kann rohrförmig oder dergleichen ausgebildet sein. Denkbar ist grundsätzlich auch eine Querschnittsform des Zufuhrkanals 21, der von einer Kreisform abweicht. Es versteht sich, dass der Durchmesser des Zufuhrkanals 21 so an die Dicke der Absperrplatte 7 angepasst ist und von dieser senkrecht zur Längsrichtung L begrenzt wird, dass die Absperrplatte 7 noch eine ausreichende Stabilität im Bereich der Zufuhröffnung 19 und des Zufuhrkanals 21 aufweist.

Fig. 2 zeigt eine schematische Schnittdarstellung eines weiteren Absperrventils 1'. Gleiche Teile sind mit gleichen Bezugszeichen versehen, sodass insofern auf die Beschreibung zu Fig. 1 verwiesen wird, um Wiederholungen zu vermeiden.

Bei dem in Fig. 2 gezeigten Absperrventil 1' handelt es sich ebenfalls um einen sogenannten Rohrbrückenschieber, jedoch ist dieser als Doppelbrückenschieber ausgebildet. Diese bedeutet, dass das Absperrventil 1' statt einer Absperrplatte 7, zwei im Wesentlichen parallel zueinander angeordnete Absperrplatten 7 und 7' aufweist.

Die beiden Absperrplatten 7, 7' sind durch einen Innenkeil 23 nach einem "Keilim-Keil-Prinzip" spreizbar, der ein Verklemmen der Absperrplatten auch unter schwierigen Bedingungen verhindert. Ein derartiges Prinzip wurde im Stand der Technik bereits ausführlich beschrieben und soll daher vorliegend nicht näher erläutert werden.

Entscheidend bei einem Absperrventil mit zwei Absperrplatten 7, 7' ist es, dass die der Ausgangsöffnung der Verkokungstrommel zugewandte Absperrplatte 7 die Zugangsöffnung 19 zum Zuführen von Reststoffen in die Verkokungstrommel aufweist. Wie auch bei dem in Fig. 1 gezeigten Absperrventil 1 steht die Zugangsöffnung 19 des Absperrventils 1' in Fluidverbindung mit einem Zufuhrkanal 21, über den die Reststoffe von einer Vakuumdestillierkammer oder dergleichen in die Verkokungstrommel geleitet werden.

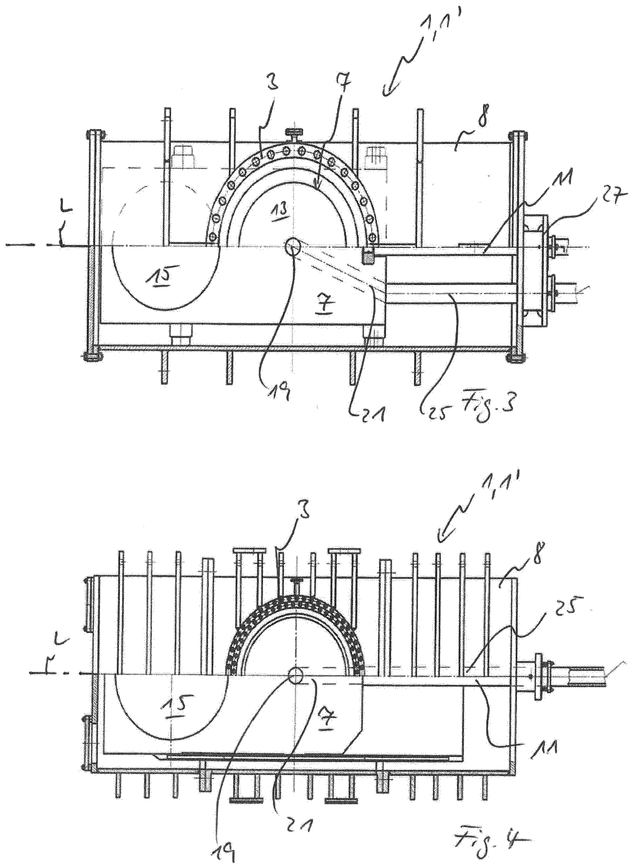

Fig. 3 zeigt eine schematische Darstellung eines Absperrventils 1, 1' mit einer Zugangsöffnung 19 und einem Zufuhrkanal 21 gemäß einer ersten Ausführungsform der Erfindung. Die Darstellung zeigt in der oberen Hälfte eine Draufsicht auf das Absperrventil 1, 1' und in der unteren Hälfte eine schematische Schnittdarstellung des Absperrventils. Bei dem in der Fig. 3 dargestellten Absperrventil kann es sich sowohl um ein in Fig. 1 gezeigtes Einplattenschieberventil als auch um ein in Fig. 2 gezeigtes Doppelplattenschieberventil handeln. Entscheidend ist, dass die Zufuhröffnung 19 in etwa auf Höhe des Absperrventils 1, 1' angeordnet ist und in die Verkokungstrommel mündet.

Fig. 3 zeigt das Absperrventil 1, 1' in der geschlossenen Stellung, d.h. die Absperrplatte 7 versperrt die Durchgangsöffnung zwischen den beiden Rohrstutzen 3 und 5. In der Absperrplatte 7 ist eine, in Bezug auf den kreisförmigen Querschnitt des Rohrstutzens 3 gesehen, zentrisch angeordnete Zugangsöffnung 19 vorgesehen, die mit einem in der Absperrplatte 7 integral ausgebildeten Zufuhrkanal 21 in Verbindung steht. Der Zufuhrkanal 21 erstreckt sich ausgehend von der Zugangsöffnung 19 in radialer Richtung bezogen auf den kreisförmigen Querschnitt des Rohrstutzens 3. Der Zufuhrkanal 21 in der Absperrplatte 7 geht über in ein Rohrelement 25, welches im Wesentlichen parallel zu der Betätigungsstange 11 verläuft, jedoch separat zu dieser ausgebildet ist.

Die Betätigungsstange 11 und das Rohrelement 25 sind in einem gemeinsamen Halterung 27 in bzw. an dem Gehäuse 8 des Absperrventils 1, 1' gelagert. Im Übrigen ist der Zufuhrkanal 21 hinsichtlich seiner Reststoffzufuhrrichtung unter einem Winkel zu der Betätigungsstange 11 angeordnet.

Fig. 4 zeigt eine schematische Darstellung eines Absperrventils mit einer Zugangsöffnung 19 und einem Zufuhrkanal 21 gemäß einer zweiten Ausführungsform der Erfindung. Die Darstellung zeigt in der oberen Hälfte eine Draufsicht auf das Absperrventil 1, 1' und in der unteren Hälfte eine schematische Schnittdarstellung des Absperrventils. Bei dem in der Fig. 4 dargestellten Absperrventil kann es sich sowohl um ein in Fig. 1 gezeigtes Einplattenschieberventil als auch um ein in Fig. 2 gezeigtes Doppelplattenschieberventil handeln.

Im Gegensatz zu der ersten Ausführungsform gemäß Fig. 3 verläuft in Fig. 4 der Zufuhrkanal 21 derart in der Absperrplatte 1, 1', dass er an der der Rohrbrücke 15 abgewandeten Stirnseite des Absperrteils 7 mit der Betätigungsstange 11 in Kontakt steht/bringbar ist. Die Betätigungsstange 11 umfasst vorzugsweise ein Rohrelement 25, welches mit dem Zufuhrkanal 21 in Fluidverbindung steht und integral in der Betätigungsstange 11 ausgebildet ist. Über das Rohrelement 25 werden dem Zufuhrkanal 21, der Zufuhröffnung 19 und schließlich der Verkokungstrommel Reststoffe zugeführt. Auf diese Weise kann folglich das in Fig. 3 gezeigte Rohrelement 25 in die Betätigungsstange 11 verlagert werden, die dann eine Doppelfunktion erfüllt.

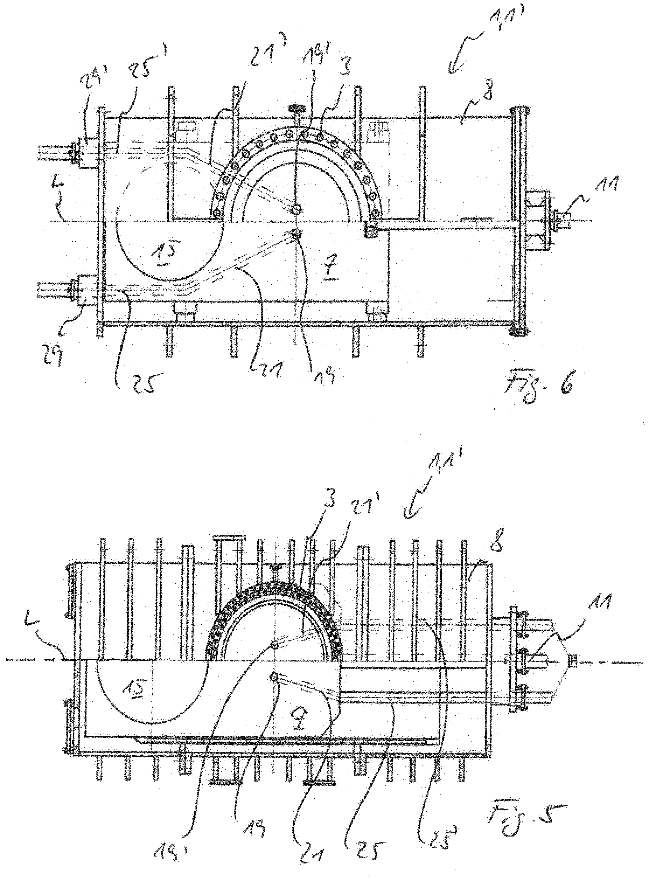

Fig. 5 zeigt eine schematische Darstellung eines abgewandelten Absperrventils mit zwei Zugangsöffnungen 19, 19' und zwei Zufuhrkanälen 21, 21' gemäß einer dritten Ausführungsform der Erfindung. Das Absperrventil weist in der Fig. 5 seine geschlossene Stellung auf. Die Darstellung zeigt in der oberen Hälfte eine Draufsicht auf das Absperrventil 1, 1' und in der unteren Hälfte eine schematische Schnittdarstellung des Absperrventils. Bei dem in der Fig. 5 dargestellten Absperrventil kann es sich sowohl um ein in Fig. 1 gezeigtes Einplattenschieberventil als auch um ein in Fig. 2 gezeigtes Doppelplattenschieberventil handeln.

Die in Fig. 5 gezeigte Ausführungsform unterscheidet sich darin von den in Fig. 3 und Fig. 4 gezeigten Ausführungsformen, dass das Absperrventil 1, 1' gemäß Fig. 5 zwei Zugangsöffnungen 19, 19' und zwei Zufuhrkanäle 21, 21' aufweist. Entsprechend sind auch zwei Rohrelemente 25 und 25' vorgesehen, die mit den in der Absperrplatte 7 ausgebildeten Zufuhrkanälen 21 und 21' in Fluidverbindung stehen, um Reststoffe über die Zugangsöffnungen 19 und 19' in die Verkokungstrommel zu transportieren.

Wie bei der Ausführungsform nach Fig. 3, verlaufen die Rohrelemente 25, 25' in der Fig. 5 im Wesentlichen parallel zu der Betätigungsstange 11 des Absperrventils 1, 1'. Die Zufuhrkanäle 21, 21' sind dann quasi spiegelbildlich zu der Betätigungsstange 11 angeordnet. Die beiden Zugangsöffnungen 19 und 19' sind im Wesentlichen zentrisch in Bezug auf den Rohrstutzen 3 und zueinander benachbart in der Absperrplatte 7 angeordnet. Die Zufuhrkanäle 21, 21' sind beispielhaft derart in der Absperrplatte 7 angeordnet, dass sie in der Zufuhrrichtung der Reststoffe einen Winkel einschließen, der kleiner als 180 ° ist.

Fig. 6 zeigt eine schematische Darstellung eines Absperrventils 1, 1' mit zwei Zugangsöffnungen 19, 19' und zwei Zufuhrkanälen 21, 21' gemäß einer vierten Ausführungsform der Erfindung. Das Absperrventil weist seine geschlossene Stellung auf. Die Darstellung zeigt in der oberen Hälfte eine Draufsicht auf das Absperrventil 1, 1' und in der unteren Hälfte eine schematische Schnittdarstellung des Absperrventils. Bei dem in der Fig. 6 dargestellten Absperrventil kann es sich sowohl um ein in Fig. 1 gezeigtes Einplattenschieberventil als auch um ein in Fig. 2 gezeigtes Doppelplattenschieberventil handeln.

Die Ausführungsform gemäß Fig. 6 unterscheidet sich im Wesentlichen dadurch von der Ausführungsform gemäß Fig. 5, dass die Rohrelemente 25 und 25' auf der der Betätigungsstange 11 gegenüberliegenden Seite der Absperrplatte 7 angeordnet sind, sodass wiederum zusätzliche Halterungen 29, 29' in dem Gehäuse 8 zur Lagerung der Rohrelemente 25, 25' erforderlich sind. Die Zufuhrkanäle 21, 21' verlaufen in diesem Fall zu beiden Seiten der Rohrbrücke 15 in der Absperrplatte 7 entlang der Längsrichtung. Jeweils ein Zufuhrkanal 21, 21' ist dabei auf einer Seite der Rohrbrücke 15 angeordnet. Die Zufuhrkanäle sind dann quasi spiegelbildlich zu der Rohrbrücke 15 angeordnet.

Insgesamt zeigt sich somit, dass die vorliegende Erfindung eine vorteilhafte homogene Zufuhr von Reststoffen in eine Verkokungstrommel ermöglicht, die zudem eine homogene Temperaturverteilung in der Verkokungstrommel während des Verkokungsprozesses gewährleistet. Es versteht sich, dass auch mehr als zwei Zufuhröffnungen vorgesehen sein können, die jeweils mit einem Zufuhrkanal in Verbindung stehen. Es kann auch vorgesehen sein, eine Zufuhröffnung mit mehr als einem Zufuhrkanal zu verbinden. Entscheidend ist es, dass die Zufuhröffnung auf Höhe des Absperrventils vorgesehen ist. Dabei kann die Zufuhröffnung in der Absperrplatte eines Rohrbrückenschieberventils, in der zylindrischen Wandung eines Rohrstutzens oder aber in der Wandung der Verkokungstrommel vorgesehen sein. Für den Fall, dass mehrere Zufuhröffnungen vorgesehen sind, sind diese vorzugsweise symmetrisch, insbesondere in Bezug auf den Rohrstutzen, angeordnet.

### Bezugszeichenliste:

- 1, 1': Absperrventil
- 3: Rohrstutzen
- 5: Rohrstutzen
- 7, 7': Absperrplatte
- 8: Gehäuse
- 9, 9': Dichtelement
- 11: Betätigungsstange
- 15: Rohrbrücke
- 17: Pfeil
- 19, 19': Zugangsöffnung
- 21, 21': Zufuhrkanal
- 23: Innenkeil
- 25, 25': Rohrelement
- 27: Halterung
- 29: Halterung
- L: Längsrichtung

## Patentansprüche

1. Verkokungstrommel, insbesondere für die Herstellung von Petroleumkoks, die einen annähernd zylindrischen Grundkörper sowie mindestens eine Eingangsöffnung und eine Ausgangsöffnung aufweist, wobei an der Ausgangsöffnung und/oder an der Eingangsöffnung ein Absperrventil (1, 1') angeordnet ist, das als Rohrbrückenschieber mit wenigstens einer Absperrplatte (7, 7') ausgebildet ist,
**dadurch gekennzeichnet, dass**
auf Höhe des Rohrbrückenschiebers (1, 1') wenigstens eine Zugangsöffnung (19, 19') zum Zuführen von Reststoffen, insbesondere aus einem der Verkokung vorgeschalteten Vakuum-Destillationsprozess, in die Verkokungstrommel vorgesehen ist.

2. Verkokungstrommel nach Anspruch 1,
**dadurch gekennzeichnet, dass**
die wenigstens eine Zugangsöffnung (19, 19') in dem Absperrventil (1, 1') angeordnet ist.

3. Verkokungstrommel nach Anspruch 1 oder 2,
**dadurch gekennzeichnet, dass**
der Rohrbrückenschieber als Einplattenschieber mit einer Absperrplatte (7) ausgebildet ist.

4. Verkokungstrommel nach Anspruch 3,
**dadurch gekennzeichnet, dass**
die wenigstens eine Zugangsöffnung (19, 19') in der Absperrplatte (7) ausgebildet ist.

5. Verkokungstrommel nach Anspruch 1 oder 2,
**dadurch gekennzeichnet, dass**
der Rohrbrückenschieber als Doppelplattenschieber mit zwei parallelen Absperrplatten (7, 7') ausgebildet ist.

6. Verkokungstrommel nach Anspruch 5,
**dadurch gekennzeichnet, dass**
die wenigstens eine Zugangsöffnung (19, 19') in der der Ausgangsöffnung der Verkokungstrommel zugewandten Absperrplatte (7) ausgebildet ist.

7. Verkokungstrommel nach einem der vorhergehenden Ansprüche 4 bis 6,
**dadurch gekennzeichnet, dass**
die wenigstens eine Zugangsöffnung (19, 19') mit wenigstens einem in der Absperrplatte (7) angeordneten Zufuhrkanal (21, 21') verbunden ist.

8. Verkokungstrommel nach Anspruch 7,
**dadurch gekennzeichnet, dass**
der wenigstens eine Zufuhrkanal (21, 21') im Wesentlichen parallel zu der Oberfläche der Absperrplatte (7) verläuft.

9. Verkokungstrommel nach Anspruch 7 oder 8,
**dadurch gekennzeichnet, dass**
der wenigstens eine Zufuhrkanal rohrförmig ausgebildet ist.

10. Verkokungstrommel nach einem der vorhergehenden Ansprüche 7 bis 9,
**dadurch gekennzeichnet, dass**
der wenigstens eine Zufuhrkanal (21, 21') mit einer Vakuumdestillationskammer in Verbindung steht, die der Verkokung in der Verkokungstrommel vorgeschaltet ist.

11. Rohrbrückenschieber, für eine Verkokungstrommel für die Herstellung von Petroleumkoks, aufweisend eine integral darin ausgebildete Zuführungsvorrichtung, umfassend wenigstens eine Zufuhröffnung (19, 19') und mindestens einen mit der Zufuhröffnung in Verbindung stehenden Zufuhrkanal (21, 21'), zum Zuführen von Reststoffen in eine mit dem Rohrbrückenschieber (1, 1') verbindbare Verkokungstrommel.

12. Verfahren zum Zuführen von Reststoffen, insbesondere aus einem der Verkokung vorgeschalteten Vakuum-Destillationsprozess, in eine mit einem Absperrventil (1, 1') verbundene Verkokungstrommel, das als Rohrbrückenschieber mit wenigstens einer Absperrplatte (7, 7') ausgebildet ist,
**gekennzeichnet durch**
Zuführen der Reststoffe auf Höhe des Rohrbrückenschiebers (1, 1') in die Verkokungstrommel.

## Claims

1. A coking drum, in particular for the production of petroleum coke, having an approximately cylindrical base body and at least one inlet opening and one outlet opening, wherein a shut-off valve (1, 1') that is formed as a pipe bridge slide and has at least one shut-off plate (7, 7') is arranged at the outlet opening and/or the inlet opening,
**characterized in that**
at the same height as the pipe bridge slide (1, 1') there is provided at least one input opening (19, 19') for feeding residual materials, in particular from a vacuum distillation process upstream of the coking process, into the coking drum.

2. The coking drum according to claim 1,
**characterized in that**
the at least one input opening (19, 19') is arranged in the shut-off valve (1, 1').

3. The coking drum according to claim 1 or 2,
**characterized in that**
the pipe bridge slide is formed as a single-plate slide having a shut-off plate (7).

4. The coking drum according to claim 3,
**characterized in that**
the at least one input opening (19, 19') is formed in the shut-off plate (7).

5. The coking drum according to claim 1 or 2,
**characterized in that**
the pipe bridge slide is formed as a double-plate slide having two parallel shut-off plates (7, 7').

6. The coking drum according to claim 5,
**characterized in that**
the at least one input opening (19, 19') is formed in the shut-off plate (7) that faces the outlet opening of the coking drum.

7. The coking drum according to any one of the preceding claims 4 to 6,
**characterized in that**
the at least one input opening (19, 19') is connected to at least one feed channel (21, 21') arranged in the shut-off plate (7).

8. The coking drum according to claim 7,
**characterized in that**
the at least one feed channel runs substantially parallel to the surface of the shut-off plate (7).

9. The coking drum according to claim 7 or 8,
**characterized in that**
the at least one feed channel is of tubular shape.

10. The coking drum according to any one of the preceding claims 7 to 9,
**characterized in that**
the at least one feed channel (21, 21') is in communication with a vacuum distillation chamber arranged upstream of the coking in the coking drum.

11. A pipe bridge slide for a coking drum for the production of petroleum coke, having a feed device integrally formed therein, comprising at least one inlet opening (19, 19') and at least one feed channel (21, 21') in communication with the inlet opening, for feeding residual materials into a coking drum that can be connected to the pipe bridge slide (1, 1').

12. A method for feeding residual materials, in particular from a vacuum distillation process upstream of the coking, into a coking drum that is connected to a shut-off valve (1, 1') that is formed as a pipe bridge slide having at least one shut-off plate (7, 7'),
**characterized by**
feeding the residual materials into the coking drum at the same height as the pipe bridge slide (1, 1').

## Revendications

1. Tambour de cokéfaction, en particulier pour la production de coke de pétrole, présentant un corps de base approximativement cylindrique ainsi qu'au moins une ouverture d'entrée et une ouverture de sortie, dans lequel un clapet antiretour (1, 1') conçu comme une coulisse à pont tubulaire avec au moins une plaque de verrouillage (7, 7') est disposé dans l'ouverture d'entrée et/ou dans l'ouverture de sortie,
**caractérisé en ce que**
à la hauteur de la coulisse à pont tubulaire (1, 1'), il est prévu au moins une ouverture d'accès (19, 19') dans le tambour de cokéfaction pour l'alimentation de matières résiduelles, en particulier issues d'un procédé de distillation sous vide en amont de la cokéfaction.

2. Tambour de cokéfaction selon la revendication 1,
**caractérisé en ce que**
l'au moins une ouverture d'accès (19, 19') est disposée dans le clapet antiretour (1, 1').

3. Tambour de cokéfaction selon la revendication 1 ou 2,
**caractérisé en ce que**
la coulisse à pont tubulaire est conçue comme une coulisse à plaque unique avec une plaque de verrouillage (7).

4. Tambour de cokéfaction selon la revendication 3,
**caractérisé en ce que**
l'au moins une ouverture d'accès (19, 19') est conçue dans la plaque de verrouillage (7).

5. Tambour de cokéfaction selon la revendication 1 ou 2,
**caractérisé en ce que**
la coulisse à pont tubulaire est conçue comme une coulisse à double plaque avec deux plaques de verrouillage (7, 7') parallèles.

6. Tambour de cokéfaction selon la revendication 5,
**caractérisé en ce que**
l'au moins une ouverture d'accès (19, 19') est conçue dans la plaque de verrouillage (7) tournée vers l'ouverture de sortie du tambour de cokéfaction.

7. Tambour de cokéfaction selon l'une des revendications précédentes 4 à 6,
**caractérisé en ce que**
l'au moins une ouverture d'accès (19, 19') est reliée à au moins un canal d'alimentation (21, 21') disposé dans la plaque de verrouillage (7).

8. Tambour de cokéfaction selon la revendication 7,
**caractérisé en ce que**
l'au moins un canal d'alimentation (21, 21') s'étend essentiellement parallèlement à la surface supérieure de la plaque de verrouillage (7).

9. Tambour de cokéfaction selon la revendication 7 ou 8,
**caractérisé en ce que**
l'au moins un canal d'alimentation est conçu de façon tubulaire.

10. Tambour de cokéfaction selon l'une des revendications précédentes 7 à 9,
**caractérisé en ce que**
l'au moins un canal d'alimentation (21, 21') est relié à une chambre de distillation sous vide installée en amont de la cokéfaction dans le tambour de cokéfaction.

11. Coulisse à pont tubulaire pour un tambour de cokéfaction destiné à produire du coke de pétrole, présentant un dispositif d'alimentation formé intégralement dans celui-ci, comportant au moins une ouverture d'accès (19, 19') et au moins un canal d'alimentation (21, 21') relié à l'ouverture d'accès, pour l'alimentation de matières résiduelles dans un tambour de cokéfaction apte à être relié à la coulisse à pont tubulaire (1, 1').

12. Procédé pour l'alimentation de matières résiduelles, en particulier à partir d'un procédé de distillation sous vide en amont de la cokéfaction, dans un tambour de cokéfaction relié à un clapet antiretour (1, 1'), lequel est conçu comme une coulisse à pont tubulaire avec au moins une plaque de verrouillage (7, 7'),
**caractérisé par**
l'alimentation des matières résiduelles à la hauteur de la coulisse à pont tubulaire (1, 1') dans le tambour de cokéfaction.
